# DEMANDE DE BREVET EUROPEEN

(11) **EP 0 816 840 A1**
(43) Date de publication de la demande: **07.01.1998**
(21) Numéro de dépôt: 97401499.5
(22) Date de dépôt: 26.06.1997
(51) Int. Cl.: G01N 29/24, G01N 29/22

(54) **Dispositif et procédé de contrôle par ultrasons d'une pièce de forte épaisseur**

(30) Priorité: 27.06.1996 FR 9608024
(71) Demandeur: Jeumont Industrie, 92400 Courbevoie (FR)
(72) Inventeur: Zurecki, Bernard, 59132 Baivre (FR); Masson, Joel, 59600 Maubeuge (FR)
(74) Mandataire: Phélip, Bruno

(57) **Abrégé**

L'invention consiste en un dispositif de contrôle par ultrasons d'une pièce de forte épaisseur comportant un transducteur d'ultrasons (20), des moyens d'excitation électrique (22, 23) du transducteur (20) pour l'émission d'ondes ultrasonores en direction d'au moins une surface (18) de ladite pièce (17), et des moyens de recueil et d'analyse (25).

Selon l'invention, le transducteur (20) comporte une pluralité d'éléments piézo-électriques (26) constituant la surface active (21) et répartis selon au moins deux groupes (27, 28), les moyens d'excitation (22, 23) étant reliés auxdits éléments piézo-électriques (26) et commandés de manière à exciter chaque groupe ou ensemble d'au moins deux groupes, selon des lois de focalisation différentes et complémentaires.

L'invention s'applique, en particulier, au contrôle des soudures d'une volute de pompe primaire.

## Description

L'invention concerne le domaine des dispositifs de contrôle non destructifs, plus particulièrement destinés à la détection et l'analyse de défauts dans des pièces de forte épaisseur, notamment en acier inoxydable austénitique, moulées et soudées.

Ces dispositifs de contrôle sont notamment utiles pour l'inspection de soudures de forte épaisseur. Pour les soudures, quatre types de défaut sont plus précisément à surveiller : défaut de liaison entre le métal de base et l'apport, défaut de fonderie, défaut entre les différentes couches constitutives de la soudure, génération et croissance de fissures.

Les pompes primaires de réacteur nucléaire comportent une volute dans laquelle tourne une roue à aubes. Les pompes permettent l'aspiration du fluide de refroidissement, puis son refoulement. La volute peut être constituée de pièces massives, reliées entre elles par des soudures. L'épaisseur de la volute est relativement importante (comprise entre 180 et 250 mm) et les soudures sont d'une épaisseur identique.

Dans le cas de réacteurs nucléaires refroidis par de l'eau sous pression, le fluide de refroidissement du réacteur, l'eau primaire, vient en contact avec le coeur du réacteur constitué par les assemblages combustibles. Le fluide de refroidissement est donc susceptible de renfermer des produits d'activation.

Il est donc essentiel d'éviter toute fuite du fluide de refroidissement depuis la volute. Les soudures de la volute constituent des zones plus fragiles qu'il convient de contrôler périodiquement et de façon minutieuse.

On connaît déjà des procédés de contrôle non destructifs mettant en oeuvre, par exemple, des sondes à courants de Foucault.

Les procédés par courants de Foucault ne permettent pas de détecter des défauts de soudure lorsque ceux sont situés à une profondeur importante, notamment supérieure à 20 mm, ainsi que dans le cas du contrôle des matériaux ferromagnétiques.

On connaît également des procédés de contrôle non destructifs mettant en oeuvre des ultrasons, destinés à des tubes. Un dispositif comportant un transducteur ou sonde ultrasonore peut ainsi être déplacé suivant la direction axiale du tube. Le faisceau d'ultrasons produit par le transducteur est, par exemple, émis directement en direction de la paroi du tube. Les signaux de mesure électrique du transducteur sont recueillis et analysés par des moyens appropriés.

Lorsque la pièce à contrôler est de forte épaisseur, les procédés à ultrasons connus ne permettent pas de détecter, de façon fiable et avec la même sensibilité, des défauts situés à des niveaux de profondeur différents lorsqu'on utilise un transducteur unique.

En effet, un tel transducteur ne permet une détection fiable des défauts que dans son domaine de focalisation. Pour sonder toute l'épaisseur de la pièce à contrôler, il est nécessaire de recourir à plusieurs transducteurs. La sensibilité du contrôle n'est donc pas constante sur toute l'épaisseur de la pièce, parce que le contrôle est réalisé avec des éléments piézo-électriques différents. De plus, il est nécessaire de changer de transducteur à chaque déplacement mécanique pour contrôler l'intégralité de la soudure, ce qui rend le contrôle plus long et peut dégrader la reproductivité.

L'invention a pour objet de pallier ces inconvénients en proposant un dispositif de contrôle non destructif permettant de détecter, avec la même fiabilité, des défauts proches comme profonds, en utilisant un transducteur unique.

L'invention concerne donc un dispositif de contrôle par ultrasons d'une pièce de forte épaisseur comportant :
- un transducteur d'ultrasons, comportant une surface active destinée à être placée en vis-à-vis d'au moins une surface de ladite pièce lors des opérations de contrôle,
- des moyens d'excitation électrique du transducteur pour l'émission d'ondes ultrasonores en direction de ladite surface,
- des moyens de recueil et d'analyse de courants électriques de mesure provenant du transducteur, caractérisé en ce que le transducteur comporte une pluralité d'éléments piézo-électriques constituant sa surface active et répartis en au moins deux groupes, les moyens d'excitation étant reliés auxdits éléments piézo-électriques et commandés de manière à exciter chaque groupe ou ensemble d'au moins deux groupes selon des lois de focalisation différentes et complémentaires et ainsi contrôler ladite pièce sur toute son épaisseur avec sensiblement la même résolution et la même sensibilité.

Les caractéristiques suivantes du dispositif de contrôle selon l'invention peuvent également être considérées, selon toutes leurs combinaisons techniquement possibles :
- les lois de focalisation de chaque groupe ou ensemble d'au moins deux groupes d'éléments piézo-électriques, sont adaptées à l'épaisseur de la pièce à contrôler,
- chacun des groupes dudit transducteur présente une forme sensiblement parallélépipédique, la surface active du transducteur étant formée par une des grandes surfaces de chacun desdits groupes,
- le transducteur est échantillonné dans un plan longitudinal.

L'invention concerne également l'utilisation du dispositif de contrôle par ultrasons précédent pour le contrôle de pièces en acier austénitique et pour inspecter une soudure d'une volute de pompe primaire.

De façon préférée, le transducteur de forme sensiblement parallélépipédique est disposé en regard de la dite soudure, de façon à ce que celle-ci soit centrée dans le plan longitudinal dudit transducteur.

De préférence également, au cours de l'inspection, le dispositif de contrôle est mis en rotation autour de l'axe de révolution de la volute.

L'invention est également relative à un procédé de contrôle par ultrasons d'une pièce de forte épaisseur au moyen du dispositif de contrôle précédent.

La surface active du transducteur dudit dispositif étant placée vis-à-vis d'une surface de ladite pièce et le contrôle étant effectué dans toute la profondeur de ladite pièce en modifiant successivement les lois de focalisation, le procédé consiste à déplacer le dispositif de contrôle par rapport à la pièce à contrôler :
- dans une première étape, à une vitesse relativement rapide correspondant à une basse résolution et permettant de détecter les zones douteuses susceptibles de renfermer des défauts et
- dans une deuxième étape, à une vitesse plus lente correspondant à une haute résolution pour quantifier et caractériser les défauts.

Les caractéristiques suivantes du procédé peuvent également être prises en considération isolément ou en combinaison :
- le contrôle dans toute la profondeur de la pièce est réalisé successivement dans au moins deux zones de profondeur différente, et notamment trois zones,
- Le transducteur étant échantillonné dans un plan longitudinal, le dispositif de contrôle est positionné par rapport à la pièce de façon à ce que sa direction de déplacement soit sensiblement perpendiculaire audit plan longitudinal, lesdits moyens d'excitation étant commandés pour effectuer un balayage électronique à chaque zone de profondeur inspectée.

L'invention sera mieux comprise et d'autres buts, avantages et caractéristiques de celle-ci apparaîtront plus clairement à la lecture de la description qui suit, faite au regard des dessins annexés qui représentent des exemples non limitatifs de réalisation de l'invention et sur lesquels :
- la figure 1 montre un exemple d'utilisation d'un dispositif de contrôle selon l'invention en position dans la volute d'une pompe primaire,
- la figure 2 représente une vue en perspective schématique d'un dispositif de contrôle selon l'invention, en position de service par rapport à une pièce à contrôler,
- la figure 3 est une vue en coupe de la figure 2, selon la ligne III-III,
- la figure 4 représente une vue en plan d'un exemple de réalisation du dispositif de contrôle selon l'invention,
- la figure 5 comprend les figures 5a et 5b : la figure 5a représente une vue schématique en coupe d'une première variante de réalisation du transducteur d'un dispositif de contrôle selon l'invention, tandis que la figure 5b représente une vue en perspective d'un autre transducteur de ce type,
- la figure 6 comprend les figures 6a et 6b : la figure 6a représente une vue schématique en coupe d'une deuxième variante de réalisation du transducteur d'un dispositif de contrôle selon l'invention, tandis que la figure 6b représente une vue en perspective d'un autre transducteur de ce type,
- la figure 7 comprend les figures 7a et 7b qui illustrent une première étape de fonctionnement d'un dispositif de contrôle selon l'invention,
- la figure 8 comprend les figures 8a et 8b qui illustrent une deuxième étape de fonctionnement d'un dispositif selon l'invention et,
- la figure 9 comprend les figures 9a et 9b qui illustrent une troisième étape de fonctionnement d'un dispositif selon l'invention.

Les éléments communs aux différentes figures seront désignés par les mêmes références.

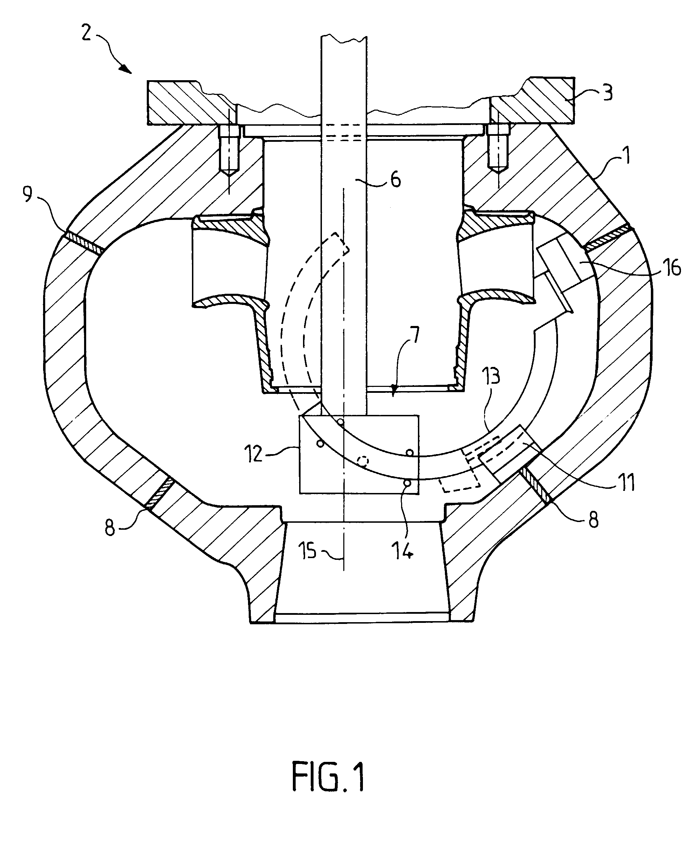

La figure 1 montre la volute 1 d'une pompe primaire, sur laquelle est positionné un exemple de dispositif d'intervention 2 destiné à la maintenance.

Le dispositif d'intervention est représenté schématiquement. Il comporte trois tapes superposées, présentant sensiblement la forme de disques de diamètres décroissants ainsi qu'une colonne 6. Seule la tape inférieure 3 est partiellement représentée sur la figure 1. Le dispositif d'intervention est décrit dans une autre demande du brevet parallèle déposée par la demanderesse. La colonne 6 supporte, à sa partie inférieure, des moyens d'intervention 7 qui permettent de détecter les défauts éventuels au niveau des soudures 8 et 9 de la volute 1.

Ces moyens d'intervention 7 sont constitués par un dispositif 11 de contrôle non destructif par ultrasons selon l'invention, et une unité 12 portant des moyens de positionnement 13.

Les moyens de positionnement 13 présentent la forme d'un bras en arc de cercle. Ce bras 13 est mobile en rotation autour de son axe grâce à l'action de moyens moteurs portés par l'unité 12 qui ne sont pas illustrés sur la figure. Dans son mouvement, le bras 13 est guidé par des paliers 14.

Lorsque les moyens d'intervention 7 sont introduits dans la volute, le bras 13 est replié le long de la colonne 6, comme illustré en pointillés sur la figure 1.

Un système de contrôle-commande permet d'agir sur les moyens moteurs du bras 13 pour faire tourner ce dernier et mettre le dispositif de contrôle 11 en regard de la soudure 8.

Lorsque ce positionnement est réalisé et que le dispositif de contrôle 11 se trouve dans la position illustrée à la figure 1, le système de contrôle-commande agit sur le dispositif 11 pour effectuer le contrôle sur toute l'épaisseur de la volute. Comme cela expliqué plus en détail dans la suite de la description, l'épaisseur de la volute est virtuellement séparée en zones à inspecter, suivant leur profondeur. Une zone déterminée est inspectée en focalisant les faisceaux d'ultrasons produits par le dispositif de contrôle 11 au niveau de cette zone. Le passage d'une zone à une autre s'effectue en modifiant la focalisation, automatiquement ou manuellement.

Dans les deux cas, le contrôle est effectué avec un transducteur unique et avec une sensibilité quasi-constante sur toute l'épaisseur de la volute.

De façon à pouvoir inspecter l'ensemble de la soudure 8, le système de contrôle-commande agit sur l'unité de commande 12 pour qu'elle se mette en rotation grâce à des moyens non représentés sur la figure. La colonne 6 étant centrée sur l'axe 15 de révolution de la volute, le bras 13 tourne ainsi autour de l'axe 15. Ce mouvement de rotation entraîne également le dispositif de contrôle 11 en rotation autour de l'axe 15, le dispositif restant positionné en regard de la soudure 8 puisque celle-ci est symétrique par rapport à l'axe 15.

Le déplacement du bras 13 et donc, du dispositif de contrôle 11 s'effectue pas à pas ou en continu.

La vitesse de rotation est choisie de telle sorte que le dispositif 11 puisse effectuer un contrôle fiable en tout point de la soudure.

La vitesse est définie en fonction de la résolution désirée.

Une vitesse rapide permet de réaliser la cartographie des indications de défauts de la soudure. Dans ce cas, l'examen sur toute la longueur de la soudure est par exemple effectuée en environ 20 minutes.

Une vitesse lente permet un balayage haute résolution sur les indications de défauts, pour préciser les caractéristiques des défauts. Dans ce cas, l'examen complet de la soudure demande par exemple environ une heure. Cependant, seules les zones douteuses seront en général examinées.

La même opération peut être effectuée pour contrôler la soudure 9, en déplaçant le bras 13 de façon à le positionner en regard de la soudure 9.

Les surfaces internes et externes de la soudure 9 ne sont ni planes, ni parallèles mais l'emploi du dispositif de contrôle 11 reste possible par adaptation des lois de focalisation à la géométrie rencontrée.

On peut également prévoir un deuxième dispositif de contrôle 16 porté par le bras 13. L'écartement entre les deux dispositifs de contrôle 11 et 16 est alors choisi pour que le dispositif de contrôle 16 soit nécessairement en regard de la soudure 9, lorsque le dispositif de contrôle 11 est en regard de la soudure 8.

Ce mode de réalisation qui est illustré à la figure 1, permet d'inspecter simultanément les deux soudures de la volute 5.

Comme on le verra de façon plus précise ultérieurement, les courants électriques de mesure transmis par les dispositifs de contrôle 11 et 16 sont stockés en vue d'une analyse ultérieure ou encore traités en temps réel.

D'autre part, un dispositif de contrôle utilisant des ultrasons nécessite la présence d'un fluide de couplage entre le dispositif lui-même et la surface à inspecter, ici la surface intérieure de la volute. Ce fluide de couplage peut notamment être de l'eau.

Il convient alors de prévoir un système du type sabot avec débit de fuite.

On peut également remplir la volute 1 avec de l'eau, les deux dispositifs de contrôle 11 et 16 étant alors immergés.

C'est pourquoi, il est préférable que l'unité 12 soit étanche.

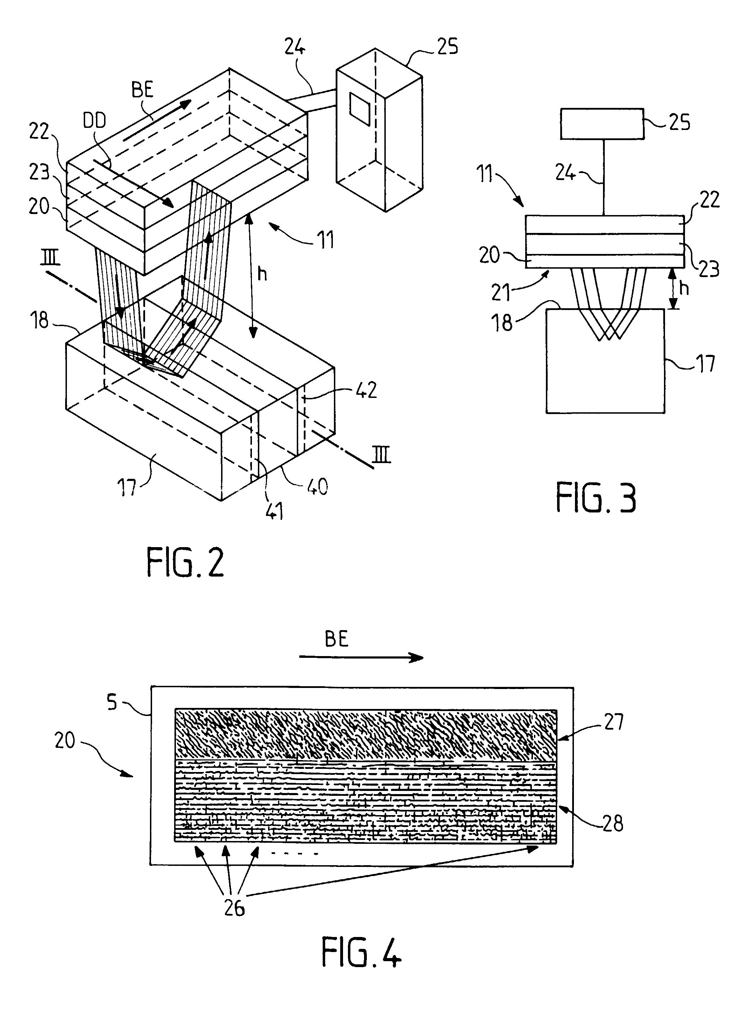

En référence maintenant aux figures 2 et 3, le dispositif de contrôle 11 par ultrasons selon l'invention est en service et placé en regard d'une pièce quelconque 17 à inspecter. La figure 3 est une vue en coupe de la figure 2, selon la ligne III-III, c'est-à-dire dans le plan de la soudure 40.

Comme le montre la figure 2, le dispositif 11 est disposé par rapport à la soudure 40 de façon à permettre un balayage électronique, représenté par la flèche BE, dans une direction perpendiculaire au plan de la soudure 40. Le balayage électronique permet ainsi d'éviter un balayage mécanique de la soudure 40, perpendiculairement au plan de la soudure. Le dispositif 11 est déplacé le long de la soudure 40, selon la flèche DD.

Le dispositif 11 comporte un transducteur 20. La surface externe 21 de ce transducteur constitue la surface active d'émission des ultrasons.

Ainsi, le transducteur 20 émet un faisceau d'ultrasons qui, comme on le verra ultérieurement, peut être focalisé à des niveaux de profondeur de la pièce 17 différents.

De préférence, la longueur du dispositif 11 est déterminée de façon à ce que les faisceaux d'ultrasons permettent d'examiner toute la largeur de la soudure 40 ainsi que des zones 41 et 42, situées de part et d'autre de la soudure 40, ce qui permet d'éviter tout déplacement du dispositif 11 dans une direction perpendiculaire au plan de la soudure.

Lorsque le dispositif est en service, la surface active 21 reste constamment dirigée vers la surface 18 de la pièce 17 et sensiblement parallèle à cette surface. Une colonne de fluide de couplage, tel que de l'eau, est maintenue constante entre la surface active 21 et la surface 18 de la pièce 17. Cette colonne présente une hauteur h.

Le transducteur 20 est composé de plusieurs éléments piézo-électriques reliés à des conducteurs électriques, représentés schématiquement sous la référence 22, par un dispositif multiplexeur 23, assurant la commutation des éléments piézo-électriques.

Ces conducteurs électriques 22 et le dispositif multiplexeur 23 permettent l'alimentation du transducteur 20 en courant électrique et le recueil des siqnaux de mesure provenant du transducteur 20.

Ils sont connectés électriquement à des conducteurs d'un câble 24 d'alimentation du transducteur et de recueil des signaux, par exemple par l'intermédiaire d'un collecteur, non représenté.

Le câble 24 est relié à une unité 25 comportant des moyens d'alimentation du transducteur en courant électrique et des moyens de recueil et d'analyse des signaux de mesure provenant du transducteur.

Les signaux de mesure peuvent être stockés dans l'unité 25 en vue d'une analyse ultérieure, ou encore traités en temps réel.

Comme précédemment indiqué au regard de la figure 1, dans certains cas, la forme de la pièce à inspecter est telle que la surface active du dispositif de contrôle 11 ne peut être parallèle à la surface de la pièce. Le contrôle reste cependant possible en adaptant les lois de focalisation à la géométrie de la pièce.

On se reporte maintenant à la figure 4 pour décrire un exemple de transducteur d'un dispositif de contrôle par ultrasons selon l'invention.

Le transducteur 20 comprend un support 5 de forme sensiblement parallélépipèdique.

Sur une des deux grandes surfaces du support qui constitue la surface active 21 du transducteur, sont fixés longitudinalement des éléments piézo-électriques 26.

Ces éléments 26 sont constitués par une matière cristalline ayant des propriétés piézo-électriques, c'est-à-dire une matière qui peut être excitée par un courant électrique, de manière à vibrer et à engendrer des ondes ayant une fréquence correspondant au domaine des ondes ultrasonores.

Chacun de ces éléments 26 est relié par le dispositif multiplexeur 23 aux conducteurs électriques 22.

Les éléments piézo-électriques sont répartis en deux groupes ou rangées 27 et 28. Ces groupes peuvent être alimentés séparément ou simultanément, comme on le verra ultérieurement, suivant la zone de la pièce que l'on souhaite contrôler.

Dans un exemple de réalisation, le support 5 du transducteur 20 présente une longueur d'environ 210 mm. Chaque groupe 27 et 28 du transducteur 11 comporte 64 bâtonnets piézo-électriques d'environ 3 mm, noyés dans une matière du type polymère.

Le premier groupe 27 présente une largeur d'environ 20 mm et le deuxième groupe 28 une largeur d'environ 45 mm. c'est donc la longueur des bâtonnets qui change d'un groupe à l'autre.

Le transducteur est échantillonné dans un plan longitudinal, ce qui permet d'effectuer un balayage électronique dans ce même plan, selon la flèche BE.

Le transducteur plan dissymétrique décrit en référence à la figure 3 peut faire l'objet de variantes pour adapter le contrôle à différents types de défauts recherchés ou pour diminuer l'expansion latérale de la tâche focale si une grande résolution est exigée.

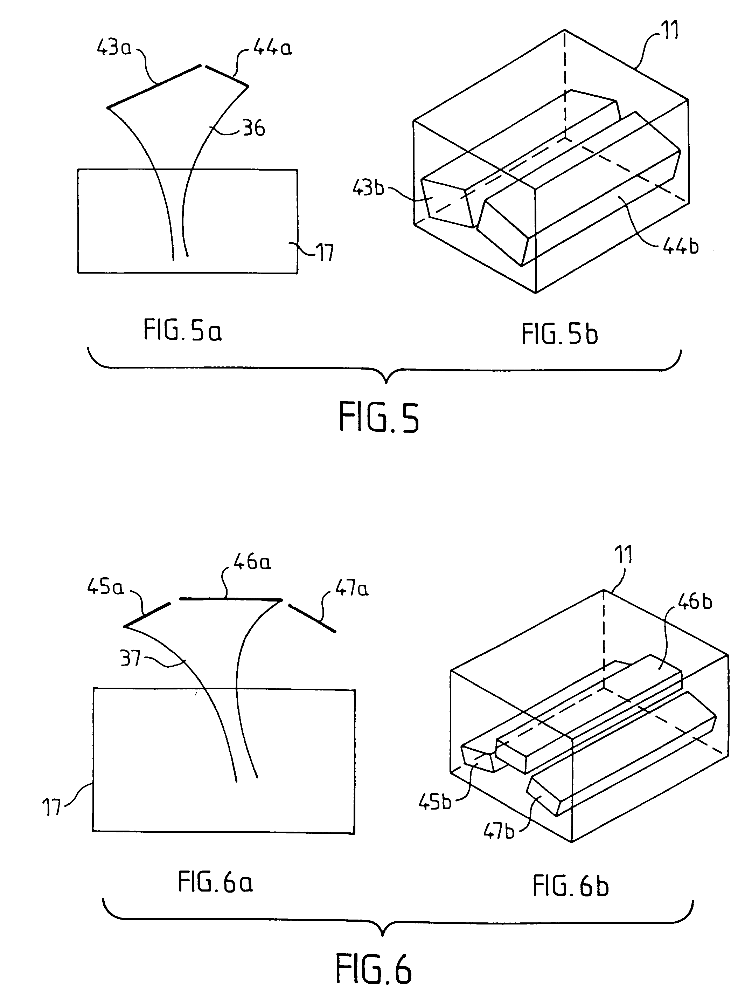

Une première variante est illustrée à la figure 5 qui représente un transducteur à deux rangées 43a, 43b et 44a , 44b disposées en toit. Le transducteur peut être dissymétrique, comme illustré à la figure 5a où la largueur des deux rangées 43a et 44a est différente. Le transducteur de la figure 5a est représenté en regard d'une pièce 17. La référence 36 représente le faisceau d'ultrasons produit par le transducteur. Un transducteur dissymétrique permet d'orienter le faisceau avec une inclinaison particulière, et d'ainsi mieux détecter et caractériser des fissures. Un transducteur de ce type peut également être symétrique, la largeur des deux rangées étant alors identique, comme illustré à la figure 5b. Les deux rangées 43a et 43b sont représentées schématiquement dans le dispositif de contrôle 11.

Cette première variante donne une convergence de faisceau à une profondeur particulière, ce qui améliore la résolution.

Une deuxième variante est illustrée à la figure 6 qui représente un transducteur symétrique à trois rangées 45a, 45b ; 46a, 46b ; 47a, 47b constitué d'une rangée 46a, 46b plane, entourée de deux rangées 45a, 45b ; 47a, 47b en toit.

Ce type de transducteur permet d'orienter le faisceau pour vérifier avec une seule incidence d'émission l'origine des échos reçus. Ceci permet une caractérisation rapide des principaux types de défauts, le point de convergence des faisceaux étant adapté à la profondeur de focalisation et à l'épaisseur de la pièce.

Le transducteur de la figure 6a est représenté en regard d'une pièce 17. La largeur de la rangée 46a est supérieure à celle des rangées 45a et 47a. La référence 37 désigne le faisceau d'ultrasons produit par le transducteur. Le transducteur de la figure 6b, avec les rangées 45b, 46b et 47b de largeur identique, est schématiquement représenté dans le dispositif de contrôle 11.

Dans une forme particulière de réalisation d'un transducteur plan ou en toit à deux rangées tel qu'illustré aux figures 4 et 5, les deux rangées sont constituées par exemple de 128 petits éléments et de 64 grands éléments, c'est-à-dire de 64 éléments de plus grande longueur que les 128 petits éléments.

L'excitation de la seule première rangée de 128 éléments permet de réaliser un contrôle à faible profondeur et à grande résolution.

L'excitation de la moitié des éléments de la première rangée à 128 éléments conjuguée avec celle des 64 grands éléments de la deuxième rangée permet un contrôle en profondeur. Ce procédé permet une amélioration des performances du transducteur représenté aux figures 4 et 5, en zone peu profonde.

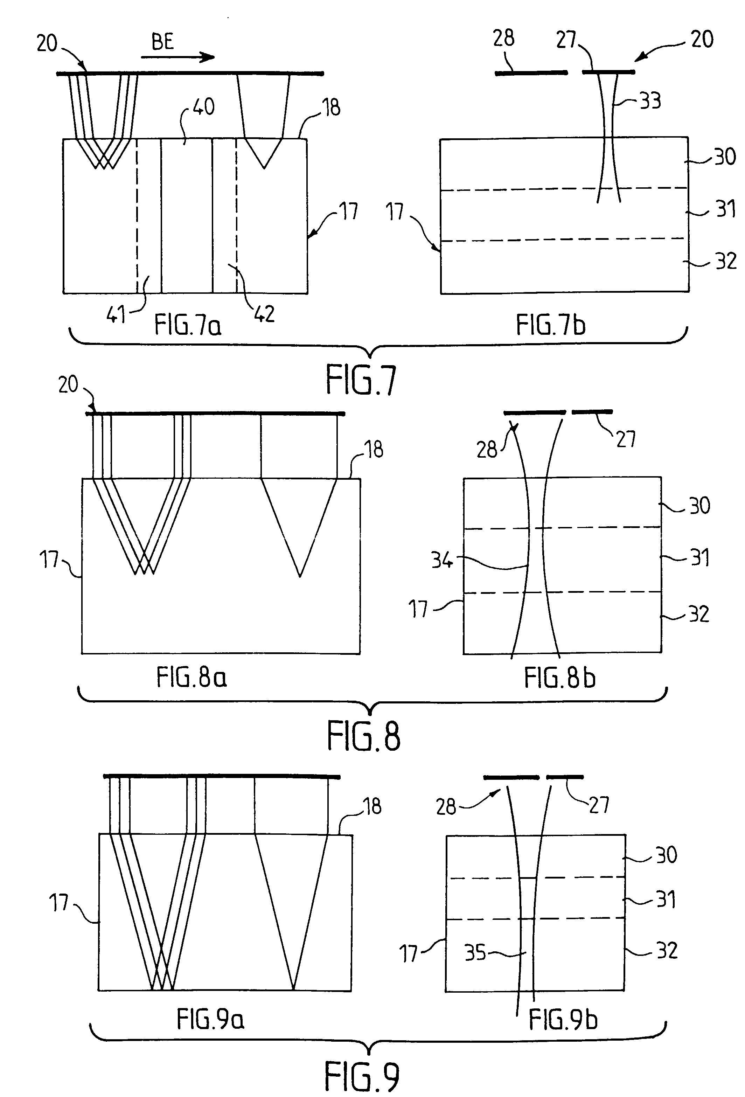

On se reporte maintenant aux figures 7 à 9 pour décrire le fonctionnement du dispositif de contrôle par ultrasons selon l'invention. C'est le transducteur de la figure 4 qui est ici utilisé.

Les figures 7a, 8a et 9a montrent, de façon schématique, le transducteur 20 et la pièce 17 à inspecter, selon un plan longitudinal, c'est-à-dire dans un plan sensiblement perpendiculaire au plan de la soudure 40, ou de toute autre zone susceptible de contenir des défauts et dans lequel un balayage électronique est de préférence réalisé. Les figures 7b, 8b et 9b montrent ces mêmes éléments, selon un plan transversal, c'est-à-dire dans le plan de la soudure 40 ou de toute autre zone pouvant contenir des défauts.

Dans l'exemple illustré sur les figures 7 à 9, la pièce à inspecter 17 est virtuellement divisée en trois zones, une zone superficielle 30, une zone moyenne 31 et une zone profonde 32.

A chaque groupe ou rangée 27, 28 ou ensemble de groupes du transducteur 20, est associée une focalisation déterminée, située dans une des trois zones. La focalisation est adaptée à l'épaisseur de la pièce. Cette adaptation peut se faire électroniquement lors d'un contrôle automatique.

Ainsi, la focalisation des faisceaux d'ultrasons produits par les éléments piézo-électriques 26 du premier groupe 27 et émis en direction de la pièce 17, permet d'obtenir une tache focale 33 dans la zone superficielle 30. Cette dernière est, de préférence, positionnée dans le quart supérieur de la zone superficielle 30 de la pièce 17, de façon à ce que toute la zone superficielle puisse être inspectée.

Les éléments piézo-électriques sont, dans cet exemple, placés selon le plan longitudinal.

Ainsi, lorsque l'on doit inspecter une volute, au niveau de ses soudures, comme illustré à la figure 1, le dispositif de contrôle 11 est placé, en regard de la soudure 8 ou 9, de façon à ce que celle-ci soit sensiblement centrée dans le plan longitudinal du transducteur 20. Puisque ce dernier est échantillonné dans le plan longitudinal, on peut effectuer un balayage électronique de part et d'autre de la soudure 8 ou 9, ce qui évite de déplacer le transducteur dans le plan longitudinal.

La focalisation des faisceaux d'ultrasons produits par les éléments piézo-électriques 26 du deuxième groupe 28 et émis en direction de la pièce 17, permet d'obtenir une tache focale 34, dans la zone moyenne 31 de la pièce 17. De préférence, la tache focale 34 est positionnée dans le quart supérieur de la zone moyenne 31, de façon à pouvoir inspecter toute la zone moyenne avec un recouvrement partiel de la zone superficielle 30.

Dans cet exemple, le transducteur est échantillonné dans le plan longitudinal. On peut également effectuer un balayage électronique dans le plan longitudinal, pour les éléments piézo-électriques du deuxième groupe.

Enfin, la focalisation des faisceaux d'ultrasons produits par les éléments piézo-électriques 26 des premier et deuxième groupes ou rangées 27 et 28 et émis en direction de la pièce 17, permet d'obtenir une tache focale 35, dans la zone profonde 32 de la pièce 17. Comme précédemment, la tâche focale 35 est, de préférence, positionnée dans le quart supérieur de la zone profonde 32, pour pouvoir inspecter toute la zone profonde avec un recouvrement partiel de la zone moyenne 31.

Dans ce cas également, le balayage électronique s'effectue dans le plan longitudinal.

Ainsi, le contrôle est effectué en déplaçant le dispositif de contrôle selon l'invention en regard de la surface de la pièce à inspecter et dans le plan de la soudure ou de toute autre zone à inspecter, c'est-à-dire dans une direction sensiblement perpendiculaire à celle dans laquelle s'effectue le balayage électronique.

En tout point, on alimente successivement les différents éléments piézo-électriques constituant le transducteur du dispositif de contrôle, le balayage électronique étant effectué successivement pour chacune des zones dont est virtuellement composée la zone à inspecter.

De préférence, le dispositif de contrôle est tout d'abord déplacé à une vitesse relativement rapide correspondant à une basse résolution, de façon à détecter les zones douteuses, susceptibles de renfermer des défauts.

Dans une deuxième étape, le dispositif de contrôle est déplacé à une vitesse plus lente correspondant à une haute résolution pour quantifier et caractériser les défauts.

De préférence, dans cette deuxième étape, le dispositif de contrôle est déplacé uniquement en regard des zones douteuses, susceptibles de renfermer des défauts.

A titre d'illustration, dans l'exemple de réalisation du transducteur 20 donné plus haut, le premier groupe 27 d'éléments piézo-électriques permet le contrôle d'une pièce 17, en acier, dans une zone de surface en focalisant sensiblement à une profondeur de 45 mm, le deuxième groupe 28 dans une zone moyenne en focalisant sensiblement à une profondeur de 125 mm et les premier et deuxième groupes 27 et 28 dans une zone profonde en focalisant sensiblement à une profondeur de 200mm.

De préférence, la position des différentes taches focales est choisie de façon à ce que les zones de contrôle se recouvrent au moins partiellement, ce qui permet d'assurer un contrôle de la pièce sur toute son épaisseur.

On peut également envisager un transducteur comportant plus de deux groupes d'éléments piézo-électriques comme celui illustré à la figure 6, les groupes étant commandés individuellement ou par ensemble d'au moins deux groupes selon des lois de focalisation différentes.

Ainsi, le dispositif de contrôle par ultrasons selon l'invention ne nécessite qu'un seul transducteur 20 pour contrôler la pièce 17 de forte épaisseur, le contrôle étant réalisé successivement selon des zones de profondeur différente, avec une sensibilité pratiquement constante sur toute l'épaisseur de la pièce.

La commutation des différents éléments piézo-électriques 26 peut être obtenue par un dispositif de multiplexage tel que référencé 23 sur la figure 2. Un dispositif de ce type permet de transmettre de multiples informations de manière séquentielle, en direction des éléments 26 ou en provenance de ces éléments.

Lors d'un contrôle automatique, la focalisation est effectuée sur une des zones, le passage d'une zone à l'autre s'opérant par commutation des lois de focalisation. Les commutations sont réalisées par récurrence, fixée en fonction de la précision recherchée et par conséquence de la vitesse de déplacement du transducteur par rapport à la soudure, c'est-à-dire la vitesse de rotation du bras 13 dans le cas où le dispositif de contrôle est utilisé pour inspecter une soudure d'une volute de pompe primaire, comme illustré à la figure 1.

Lors d'un contrôle manuel, l'opérateur peut programmer la focale du transducteur et même l'angle du faisceau par rapport à la surface externe de la pièce.

Pour chaque zone de profondeur, les ondes réfléchies par les défauts éventuels dans la pièce 17 sont reçues par les éléments piézo-électriques 26 excités. Ceux-ci émettent des signaux électriques caractéristiques de la présence de ces défauts.

Ces signaux électriques sont analysés dans l'unité de traitement 25 du dispositif de contrôle selon l'invention. Ils permettent de déceler, de manière très précise et très sensible, la présence de défauts dans la pièce 17.

Le pouvoir de résolution du transducteur comportant les éléments piézo-électriques peut être adapté à la finesse des défauts recherchés.

Comme plus indiqué plus haut, il est nécessaire d'assurer le couplage entre le transducteur du dispositif de contrôle par ultrasons selon l'invention.

Ceci peut être obtenu avec un sabot de plexiglass. On peut également utiliser un boîtier alimenté en fluide de couplage, comme de l'eau. A l'intérieur de ce boîtier, est fixé le transducteur. Des joints sont prévus pour assurer une jonction étanche entre le boîtier et la surface de la pièce en regard de laquelle la surface active du transducteur est placée.

Des moyens peuvent également être prévus pour le déplacement du boîtier.

La description qui précède a surtout porté sur l'inspection d'une soudure d'une volute de pompe primaire mais le dispositif de contrôle par ultrasons selon l'invention peut également être utilisé pour inspecter une zone quelconque de la volute ou d'une autre pièce, susceptible de présenter des défauts.

Les signes de référence insérés après les caractéristiques techniques mentionnées dans les revendications, ont pour seul but de faciliter la compréhension de ces dernières, et n'en limitent aucunement la portée.

## Revendications

1. Dispositif de contrôle par ultrasons d'une pièce de forte épaisseur comportant :
- un transducteur d'ultrasons (20) comportant une surface active (21) destinée à être placée en vis-à-vis d'au moins une surface (18) de ladite pièce (17) lors des opérations de contrôle,
- des moyens d'excitation électrique (23, 22) du transducteur (20) pour l'émission d'ondes ultrasonores en direction de ladite surface (18),
- des moyens de recueil et d'analyse (25) de courants électriques de mesure provenant du transducteur (20), caractérisé en ce que le transducteur (20) comporte une pluralité d'éléments piézo-électriques (26) constituant la surface active (21) et répartis selon au moins deux groupes (27, 28 ; 43, 44 ; 45, 46, 47), les moyens d'excitation (23, 22) étant reliés auxdits éléments piézo-électriques (26) et commandés de manière à exciter chaque groupe ou ensemble d'au moins deux groupes, selon des lois de focalisation différentes et complémentaires et ainsi contrôler ladite pièce (17) sur toute son épaisseur avec sensiblement la même résolution et la même sensibilité.

2. Dispositif de contrôle selon la revendication 1, caractérisé en ce que les lois de focalisation de chaque groupe (27, 28) ou ensemble d'au moins deux groupes, sont adaptées à l'épaisseur de la pièce à contrôler.

3. Dispositif de contrôle selon l'une des revendications 1 ou 2, caractérisé en ce que chacun des groupes (27, 28 ; 43, 44 ; 45, 46, 47) dudit transducteur (20) présente une forme sensiblement parallélépipédique, la surface active (21) du transducteur étant formée par une des grandes surfaces de chacun desdits groupes.

4. Dispositif de contrôle selon la revendication 3, caractérisé en ce que le transducteur est échantillonné dans un plan longitudinal.

5. Utilisation du dispositif de contrôle par ultrasons selon l'une des revendications 1 à 4 pour le contrôle de pièces en acier austénitique.

6. Utilisation du dispositif de contrôle par ultrasons selon l'une des revendications 1 à 4 pour inspecter une soudure (8,9) d'une volute (1) de pompe primaire.

7. Utilisation selon la revendication 6, selon laquelle le transducteur (20) de forme sensiblement parallélépipédique est disposé en regard de ladite soudure (8, 9), de façon à ce que celle-ci soit centrée dans le plan longitudinal dudit transducteur (20).

8. Utilisation selon l'une des revendications 6 ou 7, selon laquelle, au cours de l'inspection, le dispositif de contrôle est mis en rotation autour de l'axe de révolution (15) de la volute (1).

9. Procédé de contrôle par ultrasons d'une pièce de forte épaisseur au moyen d'un dispositif de contrôle selon l'une des revendications 1 à 4, caractérisé en ce que la surface active (21) du transducteur (20) dudit dispositif (11) étant placée vis-à-vis d'une surface (18) de ladite pièce (17) et le contrôle étant effectué dans toute la profondeur de ladite pièce en modifiant successivement les lois de focalisation, le dispositif de contrôle (11) est déplacé par rapport à ladite pièce (17) :
- dans une première étape, à une vitesse relativement rapide correspondant à une basse résolution et permettant de détecter les zones douteuses susceptibles de renfermer des défauts et
- dans une deuxième étape, à une vitesse plus lente correspondant à une haute résolution pour quantifier et caractériser les défauts.

10. Procédé de contrôle selon la revendication 9, caractérisé en ce que le contrôle dans toute la profondeur de ladite pièce (17) est réalisé successivement dans au moins deux zones de profondeur différente.

11. Procédé de contrôle selon la revendication 10, caractérisé en ce que le contrôle est réalisé dans trois zones de profondeur différente.

12. Procédé de contrôle selon l'une des revendications 9 à 11, caractérisé en ce que le transducteur (20) étant échantillonné dans un plan longitudinal, le dispositif de contrôle est positionné par rapport à la pièce (17) de façon à ce que sa direction de déplacement soit sensiblement perpendiculaire audit plan longitudinal, lesdits moyens d'excitation (23) étant commandés pour effectuer un balayage électronique à chaque zone de profondeur inspectée.
